# EUROPEAN PATENT SPECIFICATION

(11) **EP 1 337 112 B1**
(45) Date of publication and mention of the grant of the patent: **14.03.2012**
(21) Application number: 02425077.1
(22) Date of filing: 14.02.2002
(51) Int. Cl.: H04N 7/24

(54) **Process for transmitting digital television signals for multi-frequency terrestrial digital networks (DVB-T)**
Verfahren zur Übertragung von digitalen Fernsehsignalen über terrestrische digitale Multifrequenznetzwerke (DVB-T)
Procédé de transmission de signaux de télévision numériques sur des réseaux numériques terrestres multifréquences (DVB-T)

(43) Date of publication of application: 20.08.2003
(73) Proprietor: RAI RADIOTELEVISIONE ITALIANA (S.p.A.), 00195 Roma (IT)
(72) Inventor: Morello, Alberto, Torino (IT); Visintin, Michele, Torino (IT); Alberico, Gino, Torino (IT); Bertella, Andrea, Borgaro Torinese (Prov. of Torino) (IT); Sacco, Bruno, Torino (IT)
(74) Representative: Spandonari, Carlo

(56) References cited:
- CARTWRIGHT C T: "ISSUES IN MULTIPLEX AND SERVICE MANAGEMENT IN DIGITAL MULTICHANNEL BROADCASTING" INTERNATIONAL BROADCASTING CONVENTION, LONDON, GB, September 1997 (1997-09), pages 308-313, XP000668937
- EUROPEAN TELECOMMUNICATIONS STANDARDS INSTITUTE: "Digital Video Broadcasting (DVB); Implementation Guidelines for DVB terrestrial services; Transmission aspects" ETSI TR 101 190 V1.1.1, December 1997 (1997-12), pages 1-77, XP002207123
- EUROPEAN TELECOMMUNICATIONS STANDARDS INSTITUTE: "Digital Video Broadcasting (DVB); Framing structure, channel coding and modulation for digital terrestrial television" ETSI EN 300 744 V1.4.1, January 2001 (2001-01), pages 1-49, XP002207124
- EUROPEAN TELECOMMUNICATIONS STANDARDS INSTITUTE: "Digital Video Broadcasting (DVB); Framing structure, channel coding and moulation for 11/12 GHz satellite services" EN 300 421 V1.1.2, August 1997 (1997-08), pages 1-24, XP002207125

## Description

This invention is concerned with a process for transmitting digital television signals for multi-frequency terrestrial digital networks (DVB-T), particularly for transmitting digital television programs.

Digital television is based on the MPEG coding, wherein, as known, one or more streams of elementary packets (video, audio, or data packets) are generated by coders and then combined with great flexibility into a single binary stream, or transport stream that is suitable for transmission. The transport stream incorporates all the information required for achieving synchronization, decoding and display of the audiovisual contents.

More in detail, a transport stream is built within the MPEG coding by multiplexing the elementary binary streams coming from the coders into a single sequence of packets. All the packets forming an elementary stream (be it audio, video or data) are identified by an identifier code, known as PID (Packet IDentifier). Beside such information packets, the multiplexer also generates and inserts within the transport stream auxiliary information packets, which are also identified with their own PID, which include a set of PSI tables (Programme Specific Information), which are defined in the ISO/IEC 13818-1 standard and a set of SI tables (Service Information), which are defined by the ETSI ETS 300 468 standard. These will be discussed in more detail below. Moreover, since the data packets generated by the individual coders appear with a widely variable rate, the multiplexer inserts also a suitable number of null packets in the transport stream, which null packets have the only purpose of smoothing the stream, although they contain no useful information.

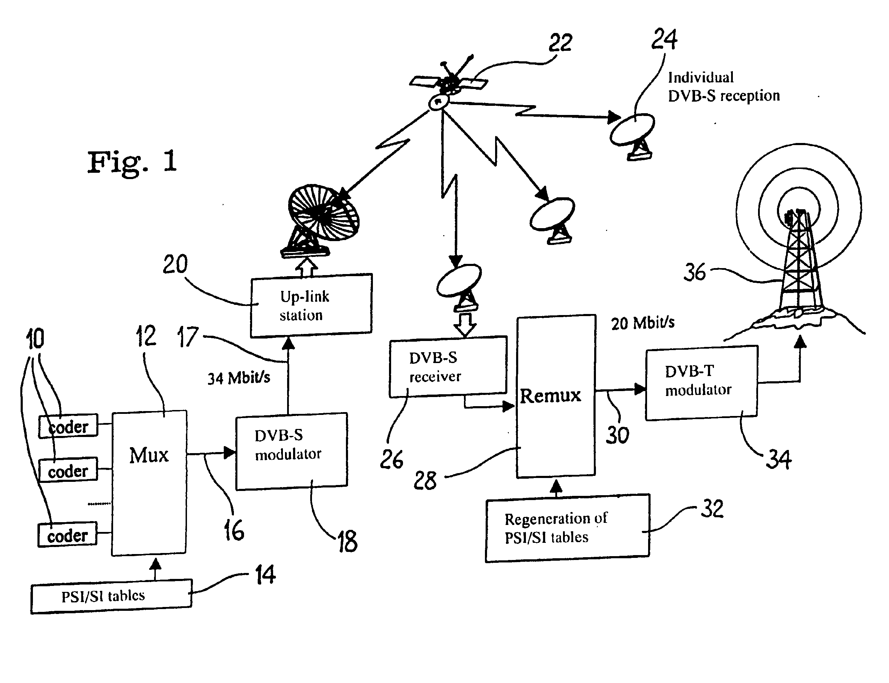

By the above technique of multiplexing a number of television programs onto a single transport stream it is now possible to feed analog terrestrial transmitters via satellite links. As known, the typical capacity of a satellite channel for digital television signals in the DVB-S standard is of about 34 Mbit/s, while the capacity of a terrestrial channel (VHF and UHF bands) using the DVB-T standard is considerably smaller, i.e. about 20 to 24 Mbit/s. Feeding terrestrial transmitters in a multifrequency network by transmitting a digital multiplex via a high-capacity satellite link (in the DVB-S standard) is technically feasible and is known to persons skilled in the art, for instance, according to the diagram shown on Fig. 1.

With reference to Fig. 1, a number of coders 10 process and compress respective digital television signals to produce respective binary streams which are then applied to a digital multiplexer 12. The individual streams are here multiplexed and PSI/SI tables 14 are inserted, so that an overall transport stream is issued on an output 16 and is then modulated onto a 34-MHz channel 17 by means of a DVB-S modulator 18. The modulated stream is then transmitted from an up-link station 20 to a satellite transponder 22. From the satellite, the signal is then broadcast to several terrestrial stations, among which, for instance, are an individual DVB-S receiver 24, where the signal is immediately used for display, and a DVB-S receiver 26, which demodulates the transport stream received and feeds it to a terrestrial broadcast installation comprising a remultiplexer 28 (also called remux) which extracts from the stream a portion of the television signals contained in it, by relying on the PSI/SI tables, and remultiplexes the extracted signals into a fresh stream 30 at 20 Mbit/s, while inserting into it fresh, regenerated PSI/SI tables 32. The new, remultiplexed stream is applied to a DVB-T modulator 34 to be broadcast by a terrestrial antenna 36.

In C. T. Cartwright: "Issues in Multiplex and Service Management in Digital Multichannel Broadcasting", International Broadcasting Convention, 12-16 September 1997, Conference Publication No. 447, XP 000668937, describes the complex operations required when transferring video data streams from one medium to another for local service delivery, including decrypting/re-encrypting, remultiplexing, generating fresh SI/PSI tables, and other, and requiring expensive equipment.

The above operating technique can be economically advantageous for the network manager, who is thereby enabled to serve users having satellite receivers as well as to feed terrestrial transmitters broadcasting to users who are only provided with terrestrial receivers. However, the technique has the inherent drawback that it requires that the tables describing the configuration of the digital multiplex (PSI and SI tables as defined by MPEG and DVB, respectively) be updated at the local level, on the sites of the terrestrial transmitters, thereby making it difficult for the network administrator to maintain centralized control. Because of this, operating problems may arise during any reconfiguration of the service (e.g., when changing from four programs at 5 Mbit/s to five programs at 4 Mbit/s. Moreover, remux 28 is a complex and expensive apparatus, which is underused in this kind of application. The complexity of the remultiplexer is due to the requirement of processing all timing references (called PCR in the ISO/IEC 13818-1 standard) which allow the terrestrial receivers to synchronize with the 27-MHz sampling clocks of the video coders 10. According to the above standard, such processing of the PCRs should be carried out by any apparatus which modifies the bit-rate of the Transport Stream (e.g., by adding or taking away packets to the Transport Stream, which are typical operations performed by re-multiplexers). If one considers that the transmitting sites where this apparatus must be installed can be quite numerous (e.g., the transmitters of a national network may be several hundreds to over one thousand), the overall cost of this approach can be definitely exorbitant.

Accordingly, the main object of the invention is to provide a process by which a number of terrestrial stations can be fed, via a satellite link, with DVB-T programs which are to be broadcast by respective antennas at different frequencies, without having to provide each of the transmitters with an expensive remultipexer. In other words, the invention, on the basis of the satellite-emitted binary stream, aims at providing a binary stream that is suitable for terrestrial broadcasting at each of the transmitters of a multi-frequency network, by means of special processing of the binary stream at the central generation chain and a corresponding processing of the stream received from the satellite.

The above and other objects and advantages, such as will appear from the following disclosure, are attained by the invention by a process for transmitting digital television signals having the features set out in claim 1.

The invention also provides a process for transforming received digital television signals having the features set out in claim 3.

Other advantageous features of the invention are set forth in the subordinate claims.

Preferred embodiments of the invention are disclosed below, with reference to the attached drawings, wherein:
Fig. 1 is a block diagram showing a satellite link from a central generating station to a number of receiving stations, among which is a terrestrial multi-frequency broadcasting station; and
Fig. 2 is a partial block diagram, similar to Fig. 1, modified according to the teachings of the invention.

The approach of the invention is to multiplex a desired number of elementary streams, corresponding to respective television programs and intended for feeding to one or more terrestrial, multi-frequency networks, into a single low-capacity binary stream, which is then remultiplexed in conventional fashion with other elementary streams into a high-capacity stream for satellite transmission. The receiving stations of the terrestrial network process the entire stream to obtain a final signal whose payload is equivalent to the initial, low-capacity stream. The signal received at the terrestrial stations is not processed by a conventional remux, but rather by means of a considerably simpler apparatus which takes advantage from the processing of the initial stream in the stream-generating chain. However, the operation of the above process for transmitting digital signals requires that some of the service information contained in the low-capacity stream is preserved through their remultiplexing into the high-capacity stream, so that it can then be utilized during processing at the terrestrial station. This condition can be satisfied by the teachings of the invention, so that the above inventive approach can be implemented.

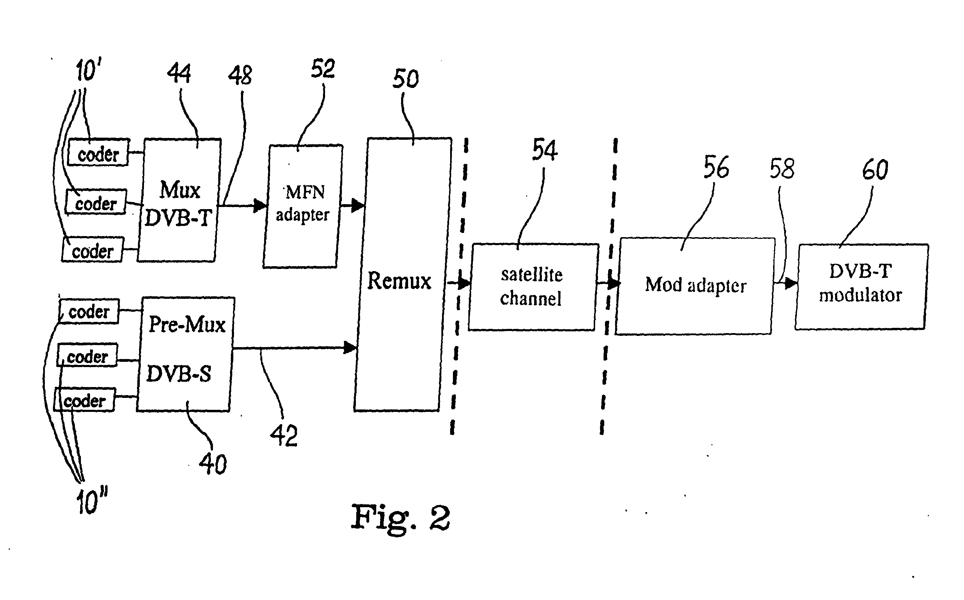

Fig. 2 is a block diagram of a transmission and reception chain through a satellite link, and is similar to the block diagram of Fig. 1, but is improved according to a first embodiment of the invention. Reference numbers on Fig. 2 are, where appropriate, the same as on Fig. 1.

With reference to Fig. 2, a first group of coders 10' receive television programs intended for broadcasting to final users via satellite and for feeding to a multi-frequency terrestrial network, while a second group of coders 10" receive television programs intended for different users, typically only for the final satellite users. The coders in both groups process and compress the respective signals conventionally.

The elementary output streams of coders 10" are applied to a digital DVB-S pre-multiplexer 40, known per se, which generates, on an output 42, a transport stream containing, in conventional manner, appropriate PSI/SI tables, as well as a suitable number of null packets.

The elementary output streams from coders 10', on the other hand, are applied to a DVB-T multiplexer 44, where the stream is provided with appropriate PSI/SI tables, as well as with the required null packets, thereby generating stream 48.

At the end, both partial transport streams 42 and 48 are to be remultiplexed in a multiplexer 50, where, however, all the auxiliary information is liable to changes, since the PSI/SI tables are re-generated, and the input null packets are ignored and are re-generated according to the requirements of the stream. On the other hand, if the low-capacity stream 48 is to be reconstructed at reception so that it contains a payload equivalent to the original payload, it will be understood that at least the following service information is to be preserved:
- the PAT table (Program Association Table): it is unique, its PID is 0x0000, and lists an identifier for each program, which is unique in the network to which the stream belongs, and contains the PID of the PMT table;
- the SDT table (Service Description Table): it is unique and its PID is 0x0011; it contains, for each program in the binary stream, its identifier and other information such as the program name (e.g. RAI1, RAI2, ...) and its producer (e.g. RAI);
- the NIT table (Network Information Table): it is unique, its PID is 0x0010; it contains tuning and modulation parameters for the binary stream (frequency, symbol rate, coding rate, etc.), which depend on the type of metwork (satellite, cable or terrestrial);
- the BIT table (Event Information Table): it is unique, its PID is 0x0012; it contains text information concerning the program schedule (title, starting and duration timetable, description of the current and the following broadcasts).

For all the above items of information, according to the process of the invention, the stream is processed in an apparatus 52, which is here called MFN adapter (Multi Frequency Network Adapter), having the task of changing the original PID of the PAT, SDT, NIT and EIT tables into a respective hiding PID, which is chosen to a value not reserved in the DVB standard. Consequently, all the packets that have been newly labeled this way are not recognized as tables by remultiplexer 50, and are reintroduced as generic data, without incurring any change, into the final transport stream that is to be modulated on a carrier and transmitted over the satellite link.

Furthermore, in order to simplify the management of the network, it is provided that the packets belonging to the low-capacity terrestrial stream are marked by setting the "priority" bit that is contained in the packet heading according to the above mentioned DVB standard.

The operation steps to be performed on the binary stream, as described above, can be easily carried out, e.g. by a computer programmed with a so-called "filter program", as well known in data processing, and easy to be assembled for carrying out the steps described above, according to techniques well known to a person skilled in the art.

Remultiplexer 50, which receives at its input both the DVB-T and the DVB-S streams, will take care of generating PSI/SI tables that are consistent with the overall program stream (PAT, SDT, NIT and EIT), valid for DVB-S transmission, and of correcting the information contained in the valid PCRs of the respective streams, including the terrestrial stream.

In the receiving station, a complementary apparatus 56, which is here called modulation adapter, or mod adapter, then has the task of creating a transport stream having a payload equivalent to the original terrestrial payload and of restoring the information that was hidden by MFN adapter 52.

Mod adapter 56 shall therefore:
- identify the services to be eliminated, based on the value of the priority bit in each packet;
- logically, and not physically, eliminate the identified service packets, the satellite-related PSI/SI tables, the satellite-related PCRs, by marking them as "null packets" (PID=8191): in practice, their respective PIDs are changed to 8191;
- restore the original values of the PIDs in the packets carrying the PSI/SI tables for the terrestrial services (PAT, SDT, NIT and EIT), which had been previously hidden by the MFN adapter.

This procedure generates an output stream 58 having a gross bit rate equal to the satellite stream, but a payload equal to the original terrestrial stream 48. With respect to the conventional approach of Fig. 1, where the bit rate is changed from the input to the output of the remultiplexer, this procedure gives rise to a considerable practical simplification. On the one hand, since the bit rate of an MPEG Transport Stream does not change, processing the time references in the PCRs is not required. On the other hand, while the conventional approach, where the bit rate is changed from the input to the output of the remultiplexer, it is necessary to generate a local output clock, typically by a loop-locked ring, in the approach proposed by the invention such a step is not necessary, because the input clock and the output clock are the same. However, it should be noted the the bit rate of the initial stream 48 (which, as stated, coincides with the bit rate of the payload 58) cannot be higher than the nominal bit rate of the selected

DVB-T modulation.

Conventional DVB-T modulators include, if used in the MFN mode, a device that is generally called TSA (Transport Stream Adapter) or Rate Adapter, whose purpose is to uncouple the modulation timing (channel clock) from the timing of the incoming data (network clock), as well known to the persons skilled in the art. This operation is performed by eliminating or adding "null packets" until the bit rate available in the chosen mode is reached, and by processing the PCR timing references (this procedure is required in the above mentioned MPEG standard at each change of the bit rate of the Transport Stream). Accordingly, the invention takes advantage from the latter functionality of DVB-T modulators for simplifying the mod adapter, which therefore operates at the same bit rate at input and at output, and does not process the PCRs.

The output 58 of Mod adapter 56 is then applied to a conventional DVB-T modulator 60, which generates the binary stream that is to be broadcast by the terrestrial antenna (not shown).

For the implementation of the mod adapter, the same indications given for the MFN adapter hold true, since the type of operations is the same.

Alternatively, according to another embodiment of the invention, the above described packet-marking by means of the priority bit is not used, and mod adapter 56 selects the packets according to a predetermined, programmed list of PID values. This approach is also very easy to be implemented, though it is less flexible, since any change in the programs will require a correction in the software at each of the receiving stations.

It should be noted that the invention can be applied whenever it is convenient to distribute to the transmitters in an MFN network a multiplexed stream having a higher capacity than is transmitted over the individual terrestrial channels, independently of the distribution means (satellite, cable, radio relay, optical fiber).

A preferred embodiment of the invention has been described, though it must be understood that changes can be made to it, as will be obvious for a person skilled in the art. For instance, the distinction between pre-mux 40, mux 44 and MFN adapter 52, as shown on Fig. 2, should be construed in a merely functional meaning, and does not necessarily reflect actual, separate circuit devices, as the steps of the process can be software-implemented, wholly or partly. Even mod adapter 56 could be incorporated in DVB-T modulator 60, thereby allowing certain common functions to be spared.

## Claims

1. A process for transmitting digital television signals over a satellite link, wherein a plurality of elementary binary streams (10'), which are generated in a central generating station and are associated with respective television programs, are multiplexed in the DVB-T protocol into a single, first transport stream, which also incorporates PSI/SI tables packets, PCR packets and null packets, and wherein said first transport stream is then modulated for transmission to a plurality of terrestrial stations over said satellite link, **characterized in that** said first transport stream, before modulation, is subjected to the following operating steps:
- masking the packets which transport PSI/SI tables of type PAT, SDT, NIT and EIT by replacing their respective PIDs with respective, predetermined, masking PID values, chosen among values that are not reserved under the DVB-S protocol;
- re-multiplexing the transport stream resulting from the preceding step to generate a second transport stream having a higher capacity than said first transport stream, for transmission over said satellite link under the DVB-S protocol.

2. The process for transmitting digital television signals of claim 1, wherein the packets in the first transport stream each include a "priority" bit, further **characterized in that** the "priority" bit, before remultiplexing, is set to a predetermined value.

3. A process for transforming digital television signals received in the form of said second transport stream generated by the process of claim 1, in order to reconstruct an output stream comprising null packets and said first transport stream packets, said output stream having a gross bit rate equal to said second transport stream, **characterized in that** said second stream is subjected to the following operating steps:
- marking as null packets all the packets having PIDs that are different from the PIDs of said first transport stream resulting from the masking step of claim 1 by replacing their PIDs;
- restoring the original PIDs in the packets transporting the previously masked PSI/SI tables, on the basis of a correspondence table.

4. A process for transforming digital television signals in the form of said second transport stream generated by the process of claim 2, in order to reconstruct **characterized in that** said second transport stream is subjected to the following operating steps:
- marking as null packets the packets having a "priority" bit that is not set to said predetermined value;
- restoring the original PIDs in the packets transporting the previously masked PSI/SI tables, on the basis of a correspondence table.

5. A process for transmitting digital television signals according to claim 1 or 2, **characterized in that** the first transport stream resulting from the masking step of claim 1 is re-multiplexed together with a third transport stream for generating said second transport stream for transmission over said satellite link.

6. A transmitting apparatus for transmitting digital television signals over a satellite link, comprising multiplexing means for multiplexing a plurality of elementary binary streams (10'), generated in a central generating station and associated with respective television programs, under the DVB-T protocol (44) into a single first transport stream (48), which also incorporates PSI/SI tables packets, PCR packets and null packets identified by respective PIDs, and modulating means for modulating said first transport stream and transmitting it over said satellite link to a plurality of terrestrial stations (24, 26),
**characterized in that** the apparatus further comprises:
- masking means (52) for replacing the PIDs identifying the packets of said first transport stream transporting PSI/SI tables of type PAT, SDT, NIT and EIT with respective, predetermined masking PID values, chosen among values that are not reserved under the DVB-S protocol; and
- re-multiplexing means (50) for re-multiplexing the transport stream issued by the masking means (52) to generate a second transport stream having a higher capacity than said first transport stream, for transmission over said satellite link under the DVB-S protocol.

7. The apparatus of claim 6, wherein the packets in the first transport stream (48) each include a "priority" bit, further **characterized in that** said masking means (52), before remultiplexing, set said "priority" bit of each of the packets in the first transport stream to a predetermined value.

8. An apparatus for transforming a transport stream generated by a transmitting apparatus according to claim 6 and received through a satellite link, **characterized in that** it comprises adapter means (56) for changing into null packets all the packets of said second transport stream having PIDs that are different from the PIDs of said first transport stream resulting from the masking means (52) by replacing their PIDs, and for restoring the original PIDs in the packets transporting the previously masked PSI/SI tables, on the basis of a predetermined correspondence table, whereby an output stream comprising null packets and said first transport stream packets is reconstructed, said output stream having a gross bit rate equal to said second transport stream.

9. A receiving apparatus for transforming a transport stream generated by a transmitting apparatus according to claim 7 and received through a satellite link, **characterized in that** it comprises adapter means (56) for marking as null packets all the packets having a "priority" bit that is not set to said predetermined value, and for restoring the original PIDs in the packets transporting the previously masked PSI/SI tables, on the basis of a predetermined correspondence table, whereby an output stream comprising null packets and said first transport stream packets is reconstructed, said output stream having a gross bit rate equal to said second transport stream.

10. An apparatus according to claim 6 or 7, **characterized in that** said re-multiplexing means (50) are arranged for re-multiplexing said first transport stream as resulting from the masking means (52) together with a third transport stream (42) for generating said second transport stream for transmission over said satellite link.

## Patentansprüche

1. Verfahren zum Übertragen von digitalen Fernsehsignalen über eine Sattelitenanbindung, wobei eine Vielzahl von elementaren binären Strömen (10'), die in einer zentralen Erzeugungsstation erzeugt werden und mit jeweiligen Fernsehprogrammen assoziiert sind, in dem DVB-T Protokoll in einen einzelnen, ersten Transportstrom gemultiplext wird, der ebenso PSI/SI-Tabellenpakete, PCR-Pakete und Nullpakete umfasst, und wobei der erste Transportstrom dann zur Übertragung zu einer Vielzahl von erdgebundenen Stationen über die Satellitenanbindung moduliert wird, **dadurch gekennzeichnet, dass** der erste Transportstrom vor der Modulation den nachfolgenden Betriebsschritten unterzogen wird:
- Maskieren der Pakete, die PSI/SI-Tabellen vom Typ PAT, SDT, NIT und EIT transportieren, durch Ersetzen von deren jeweiligen PIDs durch jeweilige vorbestimmte Maskierungs-PID-Werte, die unter Werten ausgewählt sind, die nicht unter dem DVB-S Protokoll reserviert sind;
- erneutes Multiplexen des Transportstroms, der aus dem vorhergehenden Schritt stammt, um einen zweiten Transportstrom zu erzeugen, der eine höhere Kapazität als der erste Transportstrom aufweist, zur Übertragung über die Satellitenanbindung unter dem DVB-S Protokoll.

2. Verfahren zum Übertragen von digitalen Fernsehsignalen gemäß Anspruch 1, wobei die Pakete in dem ersten Transportstrom jeweils ein "Prioritäts"-Bit umfassen, weiterhin **dadurch gekennzeichnet, dass** das "Prioritäts"-Bit vor dem erneuten Multiplexen auf einen vorbestimmten Wert gesetzt wird.

3. Verfahren zum Umwandeln von digitalen Fernsehsignalen, die in Form des zweiten Transportstroms empfangen werden, der durch den Prozess gemäß Anspruch 1 erzeugt wird, um einen Ausgabestrom zu rekonstruieren, der Nullpakete und die Pakete des ersten Transportstroms umfasst, wobei der Ausgabestrom eine Gesamtbitrate gleich dem zweiten Transportstrom aufweist, **dadurch gekennzeichnet, dass** der zweite Strom den nachfolgenden Betriebsschritten unterzogen wird:
- Markieren, als Nullpakete, aller Pakete, die PIDs aufweisen, die von den PIDs des ersten Transportstroms verschieden sind, der aus dem Maskierungsschritt gemäß Anspruch 1 stammt, durch Ersetzen von deren PIDs;
- Wiederherstellen der ursprünglichen PIDs in den Paketen, die die zuvor maskierten PSI/SI-Tabellen transportieren, auf der Grundlage einer Korrespondenztabelle.

4. Verfahren zum Umwandeln von digitalen Fernsehsignalen in Form des zweiten Transportstroms, der durch den Prozess gemäß Anspruch 2 erzeugt wird, um einen Ausgabestrom zu rekonstruieren, der Nullpakete und die Pakete des ersten Transportstroms umfasst, wobei der Ausgabestrom eine Gesamtbitrate gleich dem zweiten Transportstrom aufweist, **dadurch gekennzeichnet, dass** der zweite Transportstrom den nachfolgenden Betriebsschritten unterzogen wird:
- Markieren, als Nullpakete, der Pakete, die ein "Prioritäts"-Bit aufweisen, das nicht auf den vorbestimmten Wert gesetzt ist;
- Wiederherstellen der ursprünglichen PIDs in den Paketen, die die zuvor maskierten PSI/SI-Tabellen transportieren, auf der Grundlage einer Korrespondenztabelle.

5. Verfahren zum Übertragen von digitalen Fernsehsignalen gemäß Anspruch 1 oder 2, **dadurch gekennzeichnet, dass** der erste Transportstrom, der aus dem Maskierungsschritt gemäß Anspruch 1 stammt, zusammen mit einem dritten Transportstrom erneut gemultiplext wird, um den zweiten Transportstrom zur Übertragung über die Satellitenanbindung zu erzeugen.

6. Übertragungsvorrichtung zum Übertragen von digitalen Fernsehsignalen über eine Satellitenanbindung, umfassend eine Multiplexeinrichtung zum Multiplexen einer Vielzahl von elementaren binären Strömen (10'), die in einer zentralen Erzeugungsstation erzeugt werden und mit jeweiligen Fernsehprogrammen assoziiert sind, unter dem DVB-T Protokoll (44) in einen einzelnen, ersten Transportstrom (48), der ebenso PSI/SI-Tabellenpakte, PCR-Pakete und Nullpakete, die durch jeweilige PIDs identifiziert sind, umfasst, und eine Modulationseinrichtung zum Modulieren des ersten Transportstroms und zu dessen Übertragung über die Satellitenanbindung zu einer Vielzahl von erdgebundenen Stationen (24, 26),
**dadurch gekennzeichnet, dass** die Vorrichtung weiterhin umfasst:
- eine Maskierungseinrichtung (52) zum Ersetzen der PIDs, die die Pakete des ersten Transportstroms identifizieren, der PSI/SI-Tabellen vom Typ PAT, SDT, NIT und EIT transportiert, durch jeweilige vorbestimmte Maskierungs-PID-Werte, die unter Werten ausgewählt sind, die nicht unter dem DVB-S Protokoll reserviert sind; und
- eine Neu-Multiplexeinrichtung (50) zum erneuten Multiplexen des durch die Maskierungseinrichtung (52) ausgegebenen Transportstroms, um einen zweiten Transportstrom zu erzeugen, der eine höhere Kapazität als der erste Transportstrom aufweist, zur Übertragung über die Satellitenanbindung unter dem DVB-S Protokoll.

7. Vorrichtung gemäß Anspruch 6, wobei die Pakte in dem ersten Transportstrom (48) jeweils ein "Prioritäts"-Bit umfassen, weiterhin **dadurch gekennzeichnet, dass** die Maskierungseinrichtung (52) vor dem erneuten Multiplexen das "Prioritäts"-Bit von jedem der Pakete in dem ersten Transportstrom auf einen vorbestimmten Wert setzt.

8. Vorrichtung zum Umwandeln eines Transportstroms, der durch eine Übertragungsvorrichtung gemäß Anspruch 6 erzeugt und durch eine Satellitenanbindung empfangen wird, **dadurch gekennzeichnet, dass** sie umfasst: eine Anpassungseinrichtung (56) zum Ändern, in Nullpakete, aller Pakete des zweiten Transportstroms, die PIDs aufweisen, die von den PIDs des ersten Transportstroms verschieden sind, der aus der Maskierungseinrichtung (52) stammt, durch Ersetzen von deren PIDs, und zum Wiederherstellen der ursprünglichen PIDs in den Paketen, die die zuvor maskierten PSI/SI-Tabellen transportieren, auf der Grundlage einer vorbestimmten Korrespondenztabelle, wobei ein Ausgabestrom rekonstruiert wird, der Nullpakete und Pakete des ersten Transportstroms umfasst, wobei der Ausgabestrom eine Gesamtbitrate gleich dem zweiten Transportstrom aufweist.

9. Empfängervorrichtung zum Umwandeln eines Transportstroms, der durch eine Übertragungsvorrichtung gemäß Anspruch 7 erzeugt und durch eine Satellitenanbindung empfangen wird, **dadurch gekennzeichnet, dass** sie eine Anpassungsvorrichtung (56) umfasst zum Markieren, als Nullpakete, aller Pakete, die ein "Prioritäts"-Bit aufweisen, das nicht auf den vorbestimmten Wert gesetzt ist, und zum Wiederherstellen der ursprünglichen PIDs in den Paketen, die die zuvor maskierten PSI/SI-Tabellen transportieren, auf der Grundlage einer Korrespondenztabelle, wobei ein Ausgabestrom rekonstruiert wird, der Nullpakete und Pakete des ersten Transportstroms umfasst, wobei der Ausgabestrom eine Gesamtbitrate gleich dem zweiten Transportstrom aufweist.

10. Vorrichtung gemäß Anspruch 6 oder 7, **dadurch gekennzeichnet, dass** die Neu-Multiplexeinrichtung eingerichtet ist, um den ersten Transportstrom, wie er aus der Maskierungseinrichtung (52) stammt, zusammen mit einem dritten Transportstrom (42) erneut zu multiplexen, um den zweiten Transportstrom zur Übertragung über die Satellitenanbindung zu erzeugen.

## Revendications

1. Procédé de transmission de signaux de télévision numérique sur une liaison satellite, dans lequel une pluralité de flux binaires élémentaires (10'), générés dans une station de génération centrale et associés à des programmes de télévision respectifs, sont multiplexés selon le protocole DVB-T en un premier flux de transport unique, incorporant également des paquets à tables PSI/SI, des paquets PCR et des paquets nuls, et dans lequel ledit premier flux de transport est ensuite modulé, pour transmission à une pluralité de stations terrestres sur ladite liaison satellite, **caractérisé en ce que** ledit premier flux de transport, avant modulation, est soumis aux étapes opérationnelles suivantes :
- masquage des paquets transportant des tables PSI/SI de type PAT, SDT, NIT et EIT, par remplacement de leurs PIDs respectifs par des valeurs PID de masquage prédéterminées, respectives, choisies parmi des valeurs qui ne sont pas réservées sous le protocole DVB-S ;
- remultiplexage du flux de transport résultant de l'étape précédente, pour générer un deuxième flux de transport ayant une capacité supérieure à celle dudit premier flux de transport, pour transmission sur ladite liaison satellite sous le protocole DVB-S.

2. Procédé de transmission de signaux de télévision numérique selon la revendication 1, dans lequel les paquets situés dans le premier flux de transport comprennent chacun un bit de "priorité", en outre **caractérisé en ce que** le bit de "priorité", avant le remultiplexage, est fixé à une valeur prédéterminé.

3. Procédé de transformation de signaux de télévision numérique reçus sous la forme dudit deuxième flux de transport, généré par le procédé selon la revendication 1, de manière à reconstruire un flux de sortie comprenant des paquets nuls et lesdits premiers paquets de flux de transport, ledit flux de sortie ayant un débit binaire brut égal audit deuxième flux de transport, **caractérisé en ce que** ledit deuxième flux de transport est soumis aux étapes opérationnelles suivantes :
- marquage, en tant que paquets nuls, de tous les paquets ayant des PIDs différents des PIDs dudit premier flux de transport résultant de l'étape de masquage de la revendication 1, par le remplacement de leur PIDs ;
- restauration des PIDs originaux dans les paquets transportant les tables PSI/SI antérieurement masquées, sur la base d'une table des correspondances.

4. Procédé de transformation de signaux de télévision numérique reçus sous la forme dudit deuxième flux de transport, généré par le procédé selon la revendication 2, de manière à reconstruire un flux de sortie comprenant des paquets nuls et lesdits premiers paquets de flux de transport, ledit flux de sortie ayant un débit binaire brut égal audit deuxième flux de transport, **caractérisé en ce que** ledit deuxième flux de transport est soumis aux étapes opérationnelles suivantes :
- marquage, en tant que paquets nuls, des paquets ayant un bit de "priorité" qui ne soit pas fixé à ladite valeur prédéterminée ;
- restauration des PIDs originaux dans les paquets transportant les tables PSI/SI antérieurement masquées, sur la base d'une table des correspondances.

5. Procédé de transmission de signaux de télévision numérique selon la revendication 1 ou 2, **caractérisé en ce que** le premier flux de transport résultant de l'étape de masquage de la revendication 1 est remultiplexé, conjointement avec un troisième flux de transport, pour générer ledit deuxième flux de transport, pour transmission sur ladite liaison satellite.

6. Appareil de transmission pour transmission de signaux de télévision numérique sur une liaison satellite, comprenant des moyens de multiplexage, pour multiplexer une pluralité de flux binaires élémentaires (10'), générés dans une station de génération centrale et associés à des programmes de télévision respectifs, selon le protocole DVB-T (44) en un premier flux de transport (48) unique, incorporant également des paquets à tables PSI/SI, des paquets PCR et des paquets nuls, identifiés par des PIDs respectifs, et des moyens de modulation, pour modulation dudit premier flux de transport et transmission de celui-ci sur ladite liaison satellite, à une pluralité de stations terrestres (24, 26),
**caractérisé en ce que** l'appareil comprend en outre :
- des moyens de masquage (52), pour remplacement des PIDs identifiant les paquets dudit premier flux de transport transportant des tables PSI/SI de type PAT, SDT, NIT et EIT, par respectifs par des valeurs PID de masquage prédéterminées, respectives, choisies parmi des valeurs qui ne sont pas réservées sous le protocole DVB-S ;
- des moyens de remultiplexage (50), pour remultiplexage du flux de transport émis par les moyens de masquage (52), pour générer un deuxième flux de transport ayant une capacité supérieure à celle dudit premier flux de transport, pour transmission sur ladite liaison satellite sous le protocole DVB-S.

7. Appareil selon la revendication 6, dans lequel les paquets situés dans le premier flux de transport (48) comprennent chacun un bit de "priorité", en outre **caractérisé en ce que** lesdits moyens de masquage (52), avant le remultiplexage, fixent ledit bit de "priorité" de chacun des paquets dans le premier flux de transport à une valeur prédéterminé.

8. Appareil pour transformer un flux de transport généré par un appareil de transmission selon la revendication 6 et reçu par une liaison satellite, **caractérisé en ce qu'**il comprend des moyens adaptateurs (56), pour transformer en paquets nuls
la totalité des paquets dudit deuxième flux de transport ayant des PIDs différents des PIDs dudit premier flux de transport résultant des moyens de masquage (52), par remplacement de leurs PIDs, et pour restauration des PIDs originaux dans les paquets transportant les tables PSI/SI antérieurement masquées, sur la base d'une table des correspondance prédéterminée, de manière qu'un flux de sortie comprenant des paquets nuls et lesdits paquets de premier flux de transport soit reconstruit, ledit flux de sortie ayant un débit binaire brut égal audit deuxième flux de transport.

9. Appareil de réception pour transformer un flux de transport généré par un appareil de transmission selon la revendication 7 et reçus par une liaison satellite, **caractérisé en ce qu'**il comprend des moyens adaptateurs (56), pour marquer comme paquets nuls tous les paquets ayant un bit de "priorité" non fixé à ladite valeur prédéterminée, et pour restaurer les PIDs originaux dans les paquets transportant les tables PSI/SI antérieurement masquées, sur la base d'une table des correspondances prédéterminée, de manière qu'un flux de sortie comprenant des paquets nuls et lesdits paquets de premier flux de transport soit reconstruit, ledit flux de sortie ayant un débit binaire brut égal audit deuxième flux de transport.

10. Appareil selon la revendication 6 ou 7, **caractérisé en ce que** lesdits moyens de remultiplexage (50) sont agencés pour remultiplexer ledit premier flux de transport, tel que résultant des moyens de masquage (52), conjointement avec un troisième flux de transport (42), pour générer ledit deuxième flux de transport, pour transmission sur ladite liaison satellite.
